# EUROPÄISCHE PATENTSCHRIFT

(11) **EP 4 151 975 B1**
(45) Veröffentlichungstag und Bekanntmachung des Hinweises auf die Patenterteilung: **27.08.2025**
(21) Anmeldenummer: 22196737.5
(22) Anmeldetag: 20.09.2022
(51) Int. Cl.: G01M 3/28

(54) **VEREINFACHTES DICHTIGKEITSPRÜFVERFAHREN ZUM PRÜFEN EINES PRÜFKÖRPERS**
SIMPLIFIED LEAK TEST METHOD FOR TESTING A TEST BODY
PROCÉDÉ SIMPLIFIÉ DE CONTRÔLE DE L'ÉTANCHÉITÉ D'UN ÉCHANTILLON À TESTER

(30) Priorität: 20.09.2021 DE 102021124266
(43) Veröffentlichungstag der Anmeldung: 22.03.2023
(73) Patentinhaber: DSG-Canusa GmbH, 53359 Rheinbach (DE)
(72) Erfinder: Krannich, Jens, 98701 Großbreitenbach (DE)
(74) Vertreter: Bobzien, Hans Christoph

(56) Entgegenhaltungen:
- WO-A1-2020/021089
- DE-A1- 102016 107 216
- DE-B3- 102015 220 558
- JP-A- 2011 242 291

## Beschreibung

Im Allgemeinen betrifft die vorliegende Erfindung ein Dichtigkeitsprüfverfahren zum Prüfen eines Prüfkörpers auf Dichtigkeit, zum Beispiel eines Kabels mit einem oder mehreren Leitungen.

Als "Ader" wird vorliegend ein Draht oder eine Litze aus elektrisch leitendem Material bezeichnet, die von einem isolierenden Schutzmantel aus Kunststoff umschlossen ist. Somit sind unter dem Begriff "Leitung" die getrennt untereinander isolierten Adern eines Kabels zu verstehen. Der Begriff "Kabel" ist hier zu verstehen als ein Strang aus mehreren Leitungen, die häufig eine gemeinsame Umhüllung bzw. einen Kabelmantel aufweisen können, diesen aber nicht notwendigerweise aufweisen müssen. Eine Gruppe von zueinander parallelen und/oder verdrillten Leitungen kann aber ebenfalls ein Kabel darstellen. Eine "Kabelverbindung" stellt die Verbindung der Leitungen (bzw. Adern) eines ersten Kabels mit Leitungen eines zweiten oder anderen Kabels und/oder untereinander und/oder mit Kontakten eines anderen Bauteils dar.

Um mehrere Kabel oder Leitungen eines Kabels mit anderen Leitungen desselben oder eines anderen Kabels oder mit Verbindungselementen, z.B. Steckern oder Buchsen, zu verbinden, werden die Adern, insbesondere deren freie Enden, von der umgebenden bzw. diese umschließende Isolierung befreit und mit so ebenfalls freigelegten Abschnitten anderer Adern oder einem verbindenden Verbindungskontakt elektrisch verbunden. Die verbleibenden freien, nicht verbundenen Leitungsenden am anderen Ende des Kabels dienen dem Anschluss elektrischer Verbraucher, Energiequellen oder Sendern bzw. Empfängern von elektrischen Signalen.

Insbesondere aus der Automobilindustrie, aber auch aus anderen industriellen Bereichen, sind sogenannte "Kabelbäume" bekannt, die aus einer Mehrzahl von Kabeln, Leitungen und Verbindungen zwischen diesen bestehen und die mit bestimmten Anschlüssen oder Verbindungsstücken und bestimmten, unterschiedlichen Längen vorkonfektioniert sind.

Alle Kabelverbindungen zwischen den vorgenannten Elementen sind grundsätzlich der Gefahr einer Veränderung ihrer Kontaktwiderstände und damit einer Einschränkung ihrer Funktionsfähigkeit ausgesetzt, wenn die Isolation der Adern zum Herstellen der Verbindung entfernt wurden, so dass die elektrischen Kontaktstellen der Umgebung, insbesondere dem Sauerstoff der Atmosphäre oder Flüssigkeiten, wie Wasser oder auch aggressiven Medien, ausgesetzt sind. Die Kontaktstellen werden daher bei vielen Anwendungen, in denen es einen Ausfall oder eine Verschlechterung des elektrischen Kontakts möglichst dauerhaft zu vermeiden gilt, mit Kunststoff, z.B. einem Schrumpfschlauch oder anderem isolierenden Material umhüllt und somit permanent gegenüber der Umgebung abgedichtet, so dass ein Eintritt von Luft und umgebenden Medien wirksam verhindert wird.

Die Güte dieser Verbindung bzw. die Abdichtung zwischen einem Kabelende und einem mit einem Kabel verbundenen Element, z.B. ein Stecker, ein Kabelschuh, eine Tülle oder dergleichen muss vor dem Verbau im Rahmen der Materialprüfung auf Funktionsfähigkeit und Dichtheit überprüft werden. Solche Leitungen mit einem mit diesem verbundenen Element werden i.S. der Erfindung als "angeschlagene Leitung" bezeichnet.

Mit einer Vorrichtung zur Dichtheitsprüfung solcher Kabel bzw. Leitungen, insbesondere mittels eines umschließenden Schrumpfschlauchs zur Abdichtung des mit dem Kabelende verbundenen Elements, also einer angeschlagenen Leitung, befasst sich die vorliegende Erfindung.

### Stand der Technik

Ein gattungsgemäßes Verfahren in Verbindung mit einer Dichtheitsprüfeinrichtung zur Durchführung eines solchen Dichtigkeitsprüfverfahrens ist aus der WO 2020/021089 A1 der Anmelderin bekannt. Weiterer Stand der Technik ist bekannt aus JP 2011-242 291 A, CN 111 024 927 A und DE102016107216 A1.

### Nachteile am Stand der Technik

In dem beschriebenen Verfahren wird mit Hilfe eines von einem Schrittmotor über eine Spindel angetriebenen Kolbens in einem Zylinder, eines auf Dichtheit zu überprüfenden Kabels evakuiert, welches also innenseitig den Hohlkörper bildet. Anhand der messbaren Volumenveränderung über die Kolbenbewegung kann dabei rechnerisch das Volumen des Kabels und dem das Kabel aufnehmenden Prüfadapter bestimmt werden. Dieses stellt in Verbindung mit einer anschließenden Druckdifferenzmessung die Möglichkeit zur Verfügung, die Leckrate (Undichtigkeit) des Kabels rechnerisch zu ermitteln.

Da bei dieser Volumenermittlung ein eventuell vorhandenes Leck kompensiert werden muss, was auch gemacht wird, kann es trotzdem zu einem nicht zu vernachlässigenden Messfehler kommen.

Außerdem kommt es bei einer klassischen Druckdifferenzmessung zwangsläufig zu einer Druckänderung im Prüfkörper, was auch zur Verfälschung des Messergebnisses beitragen kann.

### Aufgabe / Technisches Problem

Ausgehend von diesem Stand der Technik liegt der Erfindung die Aufgabe zugrunde, diese Nachteile zumindest teilweise zu vermeiden und das bisherige Verfahren zu vereinfachen.

### Erfindung

Im speziellen betrifft die Erfindung ein mittels einer Dichtigkeitsprüfeinrichtung durchführbares Dichtigkeitsprüfverfahren, also ein Prüfverfahren zum Prüfen eines Prüfkörpers auf Dichtigkeit. Der Prüfkörper, mitunter auch Prüfling genannt, umfasst insbesondere mindestens eine Leitung und ein mit dieser Leitung verbundenes Verbindungselement, insbesondere einem Stecker, einer Tulle, einem Terminal oder dergleichen.

Die Leitung oder das Kabel mit mehreren Leitungen bzw. der Prüfkörper erstreckt sich von einem - offenen - Leitungsvorderende entlang einer Leitungslangsachse zu einem - verschlossenen - Leitungshinterende, an dem ein mit der Leitung verbundenes Verbindungselement angeordnet ist. Das Leitungs- oder Kabelvorderende ist z.B. durch Abisolieren, offen ausgebildet und wird in einen Prüfadapter eingesteckt, der dazu ausgebildet ist, die Leitung für die Prüfung gegenüber der Umgebung abzudichten. Dabei wird die Innenseite des Hohlraums, also der Leitung oder des Kabels mit einem durch die Prüfeinrichtung aufgebrachten Prüfdruck beaufschlagt und sodann die Dichtigkeit des Prüfkörpers geprüft.

Gelöst wird diese Aufgabe bereits durch die Merkmale des unabhängigen Anspruchs 1; vorteilhafte, aber nicht zwingende Merkmale sind in den Unteransprüchen niedergelegt.

Durch die erfindungsgemäße Modifizierung des Prüfablaufs lassen sich die beim Stand der Technik auftretenden Probleme wirksam vermeiden.

Verfahrensgemäß wird zunächst das offene Vorderende des Prüfkörpers in den Prüfadapter eingesteckt, gegenüber der Umgebung abgedichtet und mit einem Prüfdruck beaufschlagt, wobei dieses vorzugsweise durch Evakuieren der Luft im Prüfkörper erfolgt.

Anstelle der beim Stand der Technik durchgeführten Volumenermittlung innerhalb des Prüfkörpers und des Prüfadapters mit anschließender Druckdifferenzmessung, bei welcher ein möglicher Druckanstieg (Vakuummessung) über einen definierten Zeitraum gemessen wird, wird erfindungsgemäß eine "quasistatische Druckdifferenzmessung" durchgeführt. Damit ist gemeint, dass eine mögliche Druckveränderung, welche bei einer Undichtigkeit innerhalb des Prüferkörpers auftritt, durch die Druckerzeugungsvorrichtung der Prüfeinrichtung nachgeregelt wird.

Vorzugsweise erfolgt das Nachregulieren über einen Stellmotor, welcher einen Kolben antreibt und nachgeregelt werden kann, insbesondere über einen besonders genau einstellbaren Schrittmotor. Dies kann selbstverständlich auch auf andere Weise erfolgen, wie z.B. durch einen motorischen Linearantrieb oder auch einen pneumatischen Linearantrieb. Auf diese Weise kann der Prüfdruck innerhalb des Adapters und dem Prüfkörper somit nahezu konstant gehalten werden.

Dieses verbessert die Genauigkeit der Messung entscheidend. Anstelle einer Druckänderung in einem Kolben bzw. Behälter mit bekanntem konstantem Volumen, tritt erfindungsgemäß eine unmittelbar und ohne weitere Umrechnung messbare Volumendifferenz bei "quasistatischem Druck" ein. Diese Volumenänderung kann anhand der Differenz der Positionen des durch den motorisch angetriebenen Kolben sehr genau bei stets gleicher Druckdifferenz am Leck bestimmt werden. Da der Druck konstant gehalten wird, spricht man erfindungsgemäß von einer "quasistatischen Druckdifferenzmessung". Durch die Erfindung lässt sich die Leckrate folglich direkt ermitteln, ohne die Kenntnis des absoluten Volumens des Prüfkörpers, wie beim Stand der Technik.

Insofern wird erfindungsgemäß das Volumen einer möglichen Leckage das Volumen der einströmenden Luft pro Zeiteinheit in den Prüfkörper ohne Zwischenrechnung direkt erfasst. Dieses entspricht nach Umrechnung des Prüfdrucks auf die Außendruckverhältnisse nach dem Boyle'schen Gesetz, unter der Vernachlässigung der Temperatur der Leckrate.

An der Dichtigkeitsprüfeinrichtung, insbesondere an der Prüfeinrichtung umfassend den Prüfadapter, den Drucksensor und ein Ventil, also dem Messaufbau zur Ermittlung der Leckrate, können aufgrund der vielen Verschraubungen, Dichtungen und Ventile Undichtigkeiten auftreten. Jede dieser Trennstellen und auch die Zylinder-Kolben-Kombination stellt zwangsläufig eine zusätzliche Undichtigkeit dar.

Um die Wahrscheinlichkeit einer Falschmessung und die Größe des Messfehlers zur reduzieren, kann verfahrensgemäß zunächst die Leckrate des "Gesamtsystems" umfassend den Prüfkörper, den Prüfadapter zur Aufnahme des Prüfkörpers, den Drucksensor sowie des Ventils ermittelt werden und sodann, nachdem diese Leckrate des Gesamtsystems bekannt ist, kann der Prüfadapter mit dem in diesem dichtend aufgenommenen Prüfkörper abgetrennt oder "entkoppelt" werden, z.B. über ein Ventil.

Sodann kann bei gleichen Druckverhältnissen die Messung wiederholt werden. Die Differenz beider Leckraten, also der Leckrate des Gesamtsystems abzüglich der Leckrate nach der Abtrennung, was der Systemleckage entspricht, also ohne Prüfadapter und Prüfkörper, ergibt somit die Leckrate des Prüfkörpers. Auf diese Weise wird die systeminterne Leckrate zeitnah bei gleichen Verhältnisse ermittelt.

Diese Systemleckage kann auch zur Selbstkontrolle des Systems, also einer Eigenüberwachung der korrekten Funktionsfähigkeit der Dichtigkeitsprüfeinheit, also des Systems verwendet werden. Wenn nämlich die Leckage bei dem Test bei abgetrenntem Prüfadapter und Prüfkörper oberhalb eines im System hinterlegten Referenzwertes liegt, also sehr groß ist, deutet dies auf einen Systemfehler hin. Der Referenzwert wird dabei üblicherweise aus Erfahrungswerten ermittelt.

Obgleich die Erfindung bevorzugt für das Prüfen der Dichtigkeit von Kabeldichtungen an Kabelenden, also Endkabeln eingesetzt wird, ist es für den Fachmann verständlich, dass diese genauso gut eingesetzt werden kann zum Überprüfen der Dichtigkeit anderer Hohlkörper, also auch der Verbindungen und Abdichtungen eines Prüfkörpers beliebiger Art auf Dichtigkeit, z.B. eines Rohres ohne Kabel mit einem an einem Hinterende verbundenen Element, z.B. einem Behälter, einem Gehäuse oder dergleichen.

Daneben betrifft die Erfindung unabhängig von dem Dichtigkeitsprüfverfahren eine Prüfeinrichtung zur Durchführung des erfindungsgemäßen Verfahrens, welche einen Prüfadapter zur dichtenden Aufnahme eines Prüfkörpers, einen Drucksensor and ein Ventil umfasst. Das Ventil ist erfindungsgemäß als ein Vakuumsteuerblock ausgebildet, der minimal zwei Einzelventile umfasst. Vorzugsweise werden im Aufbau jedoch drei Einzelventile für Zusatzfunktionen eingesetzt, wie z.B. einen Selbsttest des Prüfadapters oder mehrfaches Evakuieren des Zylinders bei großem Prüfvolumen.

Das dem Prüfadapter am nächsten gelegene Einzelventil, welches auch als Erstventil bezeichnet werden kann, entkoppelt den Prüfadapter mit darin aufgenommenem Prüfkörper aus der Messung.

Das mittlere bzw. zweite und deshalb auch als Zweitventil bezeichnete Einzelventil entkoppelt die Druckerzeugungseinheit, vorzugsweise die Kolben-Zylinder-Kombination, von der Messung.

Und das optionale dritte Ventil, welches der Druckerzeugungsvorrichtung am nächsten gelegen ist und auch als Drittventil bezeichnet wird, belüftet die Druckerzeugungseinheit, insbesondere die Kolben-Zylinder-Kombination.

Das erfindungsgemäße Dichtigkeitsprüfverfahren wird in den Figuren anhand eines bevorzugten Ausführungsbeispiels veranschaulicht.

In der folgenden, ausführlichen Beschreibung wird auf die beigefügten Zeichnungen Bezug genommen, die Teil dieser Erfindungsbeschreibung bilden und in denen zur Veranschaulichung spezifische Ausführungsformen gezeigt werden, mit denen die Erfindung besonders gut ausgeübt werden kann. In dieser Hinsicht wird die Richtungsterminologie wie "unten", "vorne", "hinten", "vorderes", "hinteres", usw. in Bezug auf die Orientierung der beschriebenen Figur(en) verwendet.

Im Rahmen dieser Beschreibung werden die Begriffe "verbunden", "angeschlossen" sowie "integriert" zum Beschreiben sowohl einer direkten als auch einer indirekten Verbindung, eines direkten oder indirekten Anschlusses sowie einer direkten oder indirekten Integration verwendet. In den Figuren werden identische o.ä. Elemente mit identischen Bezugszeichen versehen, soweit dieses zweckdienlich ist.

Bezugszeichenlinien sind Linien, die das Bezugszeichen mit dem betreffenden Bauteil verbinden. Ein Pfeil hingegen, der mit seiner Spitze kein Teil berührt, bezieht sich auf eine Gruppe oder eine gesamte Einheit, auf die er gerichtet ist.

Die Figuren sind im Übrigen nicht unbedingt maßstäblich. Zur Veranschaulichung von Details können möglicherweise bestimmte Bereiche übertrieben groß dargestellt sein. Darüber hinaus können die Zeichnungen plakativ vereinfacht sein und enthalten nicht jedes bei der praktischen Ausführung gegebenenfalls vorhandenes Detail. Es zeigen:
- Figur 1: eine isometrische Frontansicht einer Dichtigkeitsprüfeinrichtung umfassend insgesamt acht Prüfeinrichtungen;
- Figur 2: eine isometrische Seitenansicht der Dichtigkeitsprüfeinrichtung gemäß Figur 1 mit teilmontiertem Außengehäuse;
- Figur 3: ein vergrößerter Längsschnitt einer Prüfeinrichtung bestehend aus Prüfadapter, Drucksensor und Einzelventilkombination;
- Figur 4: ein schematisches Bild zur Erläuterung des ersten Verfahrensschritts des Dichtigkeitsprüfverfahrens mit dem System im Ruhezustand;
- Figur 5: das schematische Bild bei dem zweiten Verfahrensschritt des Evakuierens und Herstellens des Prüfdrücks von hier -600 mbar;
- Figur 6: das schematische Bild des dritten Verfahrensschritts, der Leckage-Messung;
- Figur 7: das schematische Bild des vierten Verfahrensschritts, der Leckage-Messung;
- Figur 8: das schematische Bild des fünften Verfahrensschritts, der Leckage-Auswertung; und
- Figur 9: ein schematisches Bild einer Verfahrensalternative mit einem besonders großen Prüfkörper.

Demnach kann die Dichtheitsprüfeinrichtung bevorzugt ein umfänglich umschließendes, kastenartiges und öffenbares Gehäuse 2 aufweisen, welches einen Innenraum definiert, in dem mehrere Prüfeinrichtungen und die sonstige Apparatur angeordnet sind.

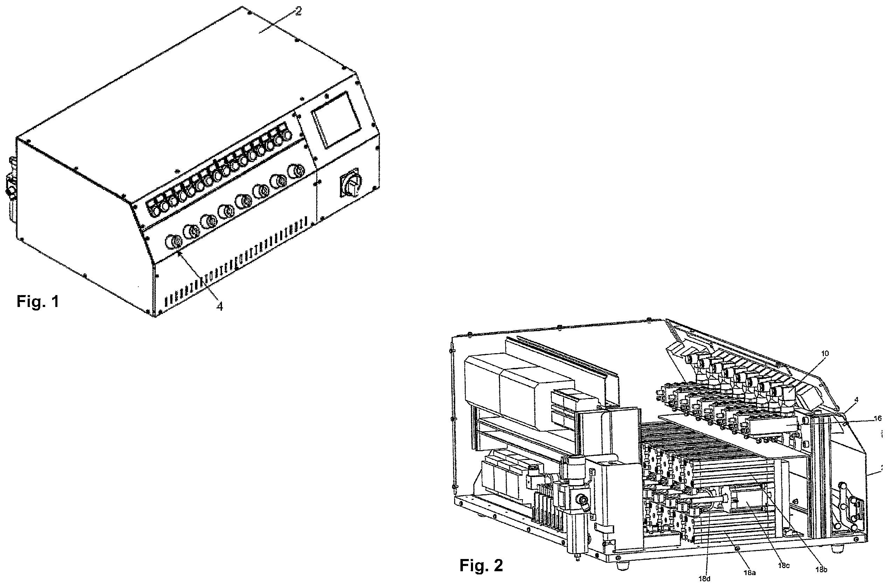

Figur 2 zeigt die jeder Prüfeinrichtung zugeordnete Druckerzeugungseinheit innerhalb der Dichtigkeitsprüfeinrichtung.

Die Druckerzeugungseinheit ist vorzugsweise ausgebildet als eine Kolbenvakuumpumpe, die je zwei Kolben-Zylinder-Kombinationen 18a, 18b umfassen kann, welche vorzugsweise in dem Gehäuse 2 liegend, zueinander parallel erstreckend, und zwar jeweils nebeneinander unterhalb von den Prüfeinrichtungen eingebaut sind. Die Kolben-Zylinder-Kombinationen 18a, 18b können über einen als Schrittmotor 18c ausgebildeten Antrieb verstellt werden, der vorzugsweise zwischen den Kolben-Zylinder-Kombinationen 18a, 18b verbaut ist.

Die Kolben-Zylinder-Kombination 18a, 18b sind vorzugsweise über eine Verbindungsleitung 18d zur Erzeugung eines Gesamtvolumens miteinander verbunden sein. Diese Ausgestaltung hat den Vorteil einer reduzierten Bauhöhe um die Hälfte, so dass Die Druckerzeugungseinheit und die Messzelle einfach in einem Gehäuse mit geringer Bauhöhe integriert werden können. Zudem ist der Schrittmotor 30c in beide Richtungen sehr genau einstellbar.

Alternativ kann jede Kolbenvakuumpumpe nur eine einzelne Kolben-Zylinder-Kombination umfassen, in welchem ein Kolben relativ beweglich verschiebbar ist. Der Antriebsmotor kann in verschiedenen relativen Lagen zum Kolben-Zylinder-Kombination angeordnet sein. Der Verfahr- oder Verstellweg des Kolbens im Zylinder kann direkt oder z.B. mittels eines Wegmessschreibers oder auch indirekt über andere Stellgrößen aufgenommen werden.

Jede Prüfeinrichtung umfasst ein vorzugsweise als Vakuumsteuerblock 16 ausgebildetes Ventil, einen Drucksensor 10 sowie einen Prüfadapter 4.

Die Prüfadapter 4 mit den Einstecköffnungen 4a sind wiederum vorderseitig an der Vorderseite des Gehäuses 2 angeordnet and ragen durch dieses nach außen. Von den Prüfeinrichtungen sind insgesamt acht in dem Gehäuse 2 angeordnet oder aufgenommen, die unabhängig voneinander betrieben werden können. Selbstverständlich können es auch mehr oder weniger sein.

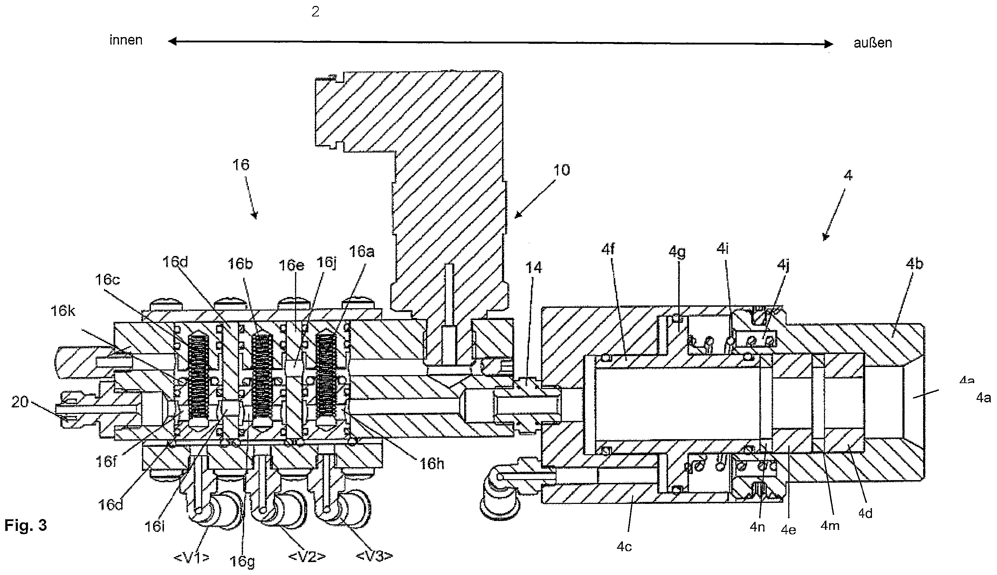

Jede der in Figur 3 vergrößert im Längsschnitt abgebildeten abgebildete Messzellen umfasst einen im Wesentlichen einen hohlzylindrischen Adapter 4, der jeweils in Einbaulage mit seiner nach vorne offenen Einstecköffnung 4a aus einer entsprechenden Öffnung in dem Gehäuse 2 ragt, so dass ein Prüfkörper mit seinem offenen/abisolierten Vorderende in diese Einstecköffnung 4a einsteckbar ist.

Ruckseitig ist der Prüfadapter 4 mit oder ohne ein zwischen-geschaltetes Leitungsstück 14 mit einem als Ventil fungierenden Vakuumsteuerblock 16 verbunden. In dem Leitungsstück 14 oder direkt in diesem Vakuumsteuerblock 16 ist ein Drucksensor 10 verbaut, der den Leitungsdruck sowie den Systemdruck in der Leitung and dem Prüfkörper misst.

Schließlich kann der Vakuumsteuerblock 16 über eine Versorgungsleitung mit einer Kolbenvakuumpumpe 12 verbunden sein; wobei vorzugsweise jede Prüfeinrichtung über eine korrespondierende Versorgungsleitung mit einer entsprechenden Kolbenvakuumpumpe zur Versorgung mit Druckluft verbunden ist.

Der Prüfadapter 4 umfasst ein im Wesentlichen hohlzylindrisches zweiteiliges Adaptergehäuse, dass etwa in der Mitte zur Bildung eines Absatzes übergeht von einem vorderen, hohlzylindrischen Dichtungsgehäuse 4b mit einem ersten Außendurchmesser in ein hinteres, ebenfalls hohlzylindrisches Außengehäuse 4c mit einem gegenüber dem Dichtungsgehäuse 4b verbreiterten zweiten Außendurchmesser, wobei das Außengehäuse 4c das Dichtungsgehäuse 4b aufnimmt. Das Dichtungsgehäuse 4b umfasst eine vorderseitige Einstecköffnung 4a, welche sich entlang der Adapterlängsachse entlang des insgesamt rotationssymmetrischen Adaptergehäuses erstreckt und zur einsteckenden Aufnahme des Prüfkörpers ausgebildet ist. Das Dichtungsgehäuse 4b hat zum Außengehäuse 4c gerichteten Ende einen radial nach außen ragenden Absatz, der innenseitig mit dem Außengehäuse 4c verbunden ist.

Innerhalb des Außengehäuses 4c ist ein ebenfalls hohlzylindrischer Druckkörper 4f relativbeweglich aufgenommen. Dieser im Wesentlichen hohlzylindrische Druckkörper 4f weist etwa mittig ein radial nach außen ragenden Außenring 4g auf, der über eine Dichtung verschieblich in einem Innenabsatz des Außengehäuses 4c sitzt.

Zwischen der dem Dichtungsgehäuse 4b zugewandten Vorderende dieses Außenrings 4g und einer Aufnahmenut 4j in der hinteren Stirnfläche des Dichtungsgehäuse ist eine Druckfeder 4i eingespannt und eine Druckscheibe 4k liegt gegen die innere Stirnfläche des Innenkörpers 4f an.

In einem Innenabsatz des Dichtungsgehäuses 4b sind zwei Dichtungsringe 4d, 4e aus Kautschuk eingesetzt und zwischen diesen Dichtungsringen 4d, 4e ist ein mittiger Distanzring und an der Innenseite zwischen der äußeren Stirnseite des Druckkörpers 4f ein äußerer Distanzring 4n.

Wird nun Druck durch ein über das Ventil einströmendes Fluid auf die Druckschreibe 4k ausgeübt, so wird der Druckkörper in dem Außengehäuseteil nach außen gedrückt gegen die beiden Dichtungsringe und komprimiert diese. Dabei dehnen diese sich zur Mittellängsachse hin aus und klemmen so einen in die Einstecköffnung 4a eingesteckten Prüfkörper umfänglich dichtend ein.

Zur Verbesserung der Messgenauigkeit ist das Leitungsstück 14 zwischen dem hinteren Ende des Adapters 4 und dem Vakuumstreuerblock 16 sehr kurz ausgebildet und der Drucksensor 10 ist in das Gehäuse des Ventils 16 links integriert.

Das Ventil ist vorzugsweise als Vakuumsteuerblock 16 ausgebildet sein, der vorliegend insgesamt drei 2/2-Einzelventile umfasst, die hintereinander in dem Gehäuse angeordnet sind und von denen jedes einzeln über einen Druckluftzylinder ansteuerbar ist. Ein Erstventil 16a ist das dem Prüfadapter 4 am nächsten gelegene Einzelventil, woran sich nach innen ein Zweitventil 16b anschließt und an welches sich wieder nach innen ein Drittventil 16c anschließt.

Jedes Einzelventil 16a, 16b, 16c umfasst zwei Ventilkolben, die sich quer zur Längsrichtung des Vakuumsteuerblocks 16 erstrecken und zwischen denen jeweils eine Feder angeordnet ist, welche die Ventilkolben nach außen gegen das Gehäuse des Vakuumsteuerblocks 16 drücken. Von den Ventilkolben ist je ein Ventilkolben feststehend und ein beweglicher Ventilkolben, der näher in einer korrespondierenden Steuerleitung gelegen ist, durch auf die Steuerleitung 16a, 16b, 16c aufgebrachten Druck gegen die Federkraft der jeweiligen Feder beweglich. So können die Einzelventile 16a, 16b, 16c durch Aufbringen von Druck durch die eine jedem Einzelventil 16a, 16b, 16c zugeordnete Steuerleitung V1, V2, V3 wahlweise geöffnet und geschlossen werden. Jeder bewegliche Ventilkolben weist eine sich quer zur Kolbenlängsachse durch den Ventilkolben verlaufende Kolbendurchgangsleitung 16f, 16g, 16h auf. Zwischen den angrenzenden Kolben ist jeweils eine trennende Kolbenwand 16d, 16e ausgebildet, welche die Kolben dichtend voneinander abtrennt und umschließt, nämlich eine äußere Kolbenwand 16d zwischen dem Drittventil 16c und dem Zweitventil 16b und eine innere Kolbenwand 16d zwischen dem zweiten Zylinder 16b und dem ersten Zylinder 16a. Jede Kolbenwand weist eine Wandöffnung 16i, 16j auf, durch welche der Druck hindurchtreten kann. Erfindungsgemäß ist die Wandöffnung 16i in der äußeren Kolbenwand 16d zwischen dem dritten 16c und dem zweiten Ventil 16b auf der Höhe der Kolbendurchgangsöffnung 16f, 16g in den beweglichen Kolben ausgebildet. In der inneren Kolbenwand 16e ist diese Wandöffnung 16j hingegen auf der Höhe der Ventilflächen zwischen dem ersten Ventil 16a und dem zweiten Ventil 16b ausgebildet.

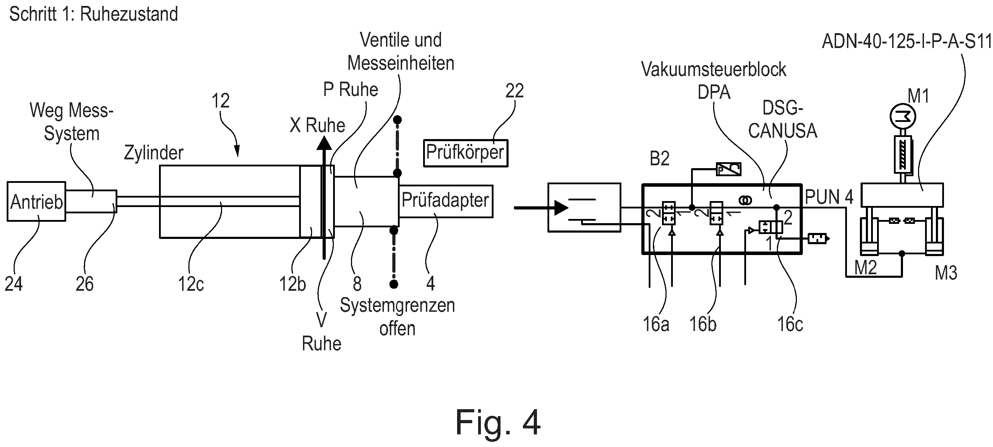

Die Figuren 4 bis 8 zeigen schematisch das neuartige Dichtigkeitsprüfverfahren anhand einer Kolbenvakuumpumpe mit einem Hauptkolben and daneben die Stellung der Einzelventile des 16a, 16b, 16c des Vakuumsteuerblocks 16.

Es sei betont, dass dieses aber in gleicher Weise mit dem der zu Figur 2 beschriebenen Kolbenvakuumpumpe mit zwei Teilkolben erfolgen.

Hierbei ist also jeweils am rechtseitigen Vorderende schematisch der Prüfadapter 4 dargestellt, in dessen vorderseitige Einstecköffnung 4a das offene Prüfende des zu prüfenden Prüfkörpers, insbesondere eines Kabelsatzes 22, einsteckbar ist.

Alternativ kann der Prüfadapter 4 auch unmittelbar mit dem Ventil 8 und dem Drucksensor (Messeinheit) verbunden sein, also ohne Zwischenschaltung eines Distanzstücks.

Entweder unmittelbar hinter dem Ventil 8 oder über eine Leitung kann die als Kolbenvakuumpumpe 12 ausgebildete Druckerzeugungsvorrichtung angeordnet sein.

Diese Kolbenvakuumpumpe umfasst einen äußeren Zylinder 12a, in dem relativbeweglich der Hauptkolben 12b angeordnet ist. Der Kolben 12b kann seinerseits ist mit einer Kolbenstange 12c verbunden sein, die über einen Antrieb 24 genau verstellbar ist. Dieser Antrieb 24, vorzugsweise ausgebildet als Schrittmotor mit Spindel, ist vorzugsweise gekoppelt mit einem Wegmesssystem 26.

Figur 4 zeigt das System bei offener Systemgrenze im Ruhestandzustand ohne eingesetzten Prüfkörper 22. Der Kolben 12b ist am vorderen Ende in der Ruheposition X Ruhe angeordnet und es herrscht Druck P Ruhe bei dem Volumen V Ruhe. Im Ruhezustand sind alle Einzelventile 16a, 16b, 16c offen.

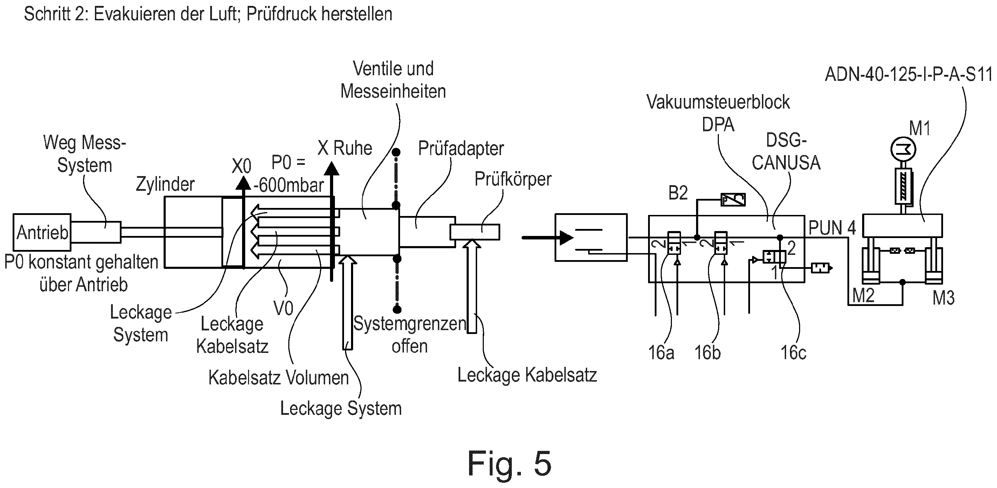

Figur 5 zeigt den in den Prüfadapter 4 eingesetzten Prüfkörper 22 sowie das Evakuieren über eine vom Volumen des Prüfkörpers abhängige Evakuierungszeit der Prüfeinrichtung und das Erstellen und das Erstellen des Prüfdrucks von P₀ = -600 mbar bei weiterhin offener Systemgrenze. Dabei können verschiedene Leckagen auftreten, nämlich die Leckage am Prüfkörper sowie die Leckage am System (Systemleckage). Der Antrieb 24 verstellt dabei den Kolben 12b innerhalb des Zylinders 12a aus der Position X _{Ruhe} zur Position X₀, so dass der Prüfdruck von hier P₀ von -600 mbar bei einem Volumen V0 konstant gehalten wird. Hierbei sind das Erstventil 16a und das Zweitventil 16 offen; das Drittventil 16c ist hingegen geschlossen.

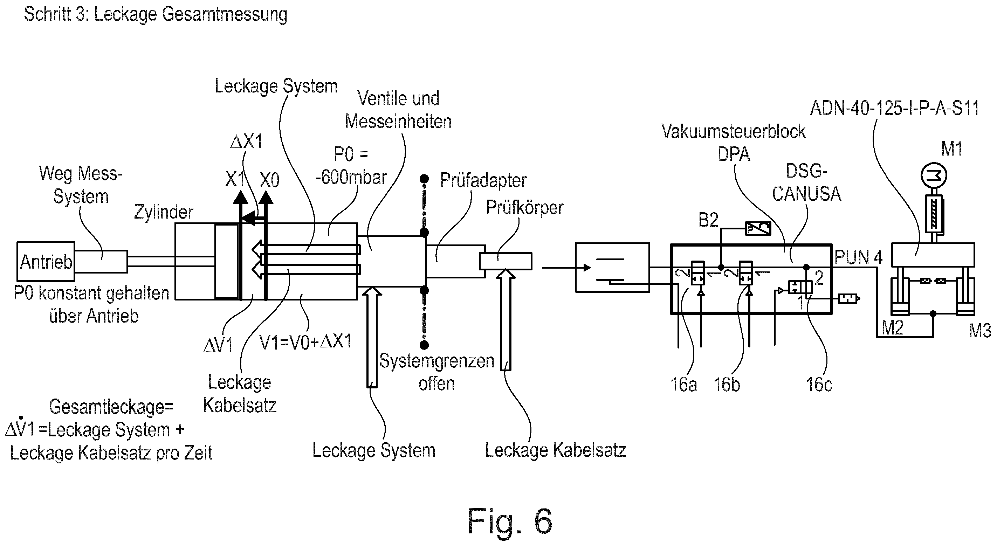

Figur 6 zeigt den dritten Verfahrensschritt der Leckage-Messung. Leckagen können bei weiterhin offener Systemgrenze, also Verbindung zwischen im Prüfadapter 4, Ventil und Messeinheit entweder im Prüfkörper/Kabelsatz oder in dem Messsystem innerhalb des Zylinders 12 über den Antrieb 26 bei gleichzeitiger Wegmessung erfolgen, wobei sich der Kolben 12b aus der Position X₀ zur Position X₁ bewegt. Hierbei ist die Gesamtleckage die Änderung des Volumenstroms ΔV₁ bedingt durch die Leckage im Gesamtsystem/Messsystem und die Leckage im Prüfkörper pro Zeiteinheit, üblicherweise ca. 2 x 120 Sekunden. Hierbei sind weiterhin das Erstventil 16a und das Zweitventil 16b offen; das Drittventil 16c ist hingegen geschlossen. Die Volumenvergrößerung ist dabei bedingt durch die Wegänderung des Kolbens im Zylinder ΔV₁. Das neue Gesamtvolumen V₁ besteht somit aus dem Anfangsvolumen, V₁ = V₀ + ΔV₁.

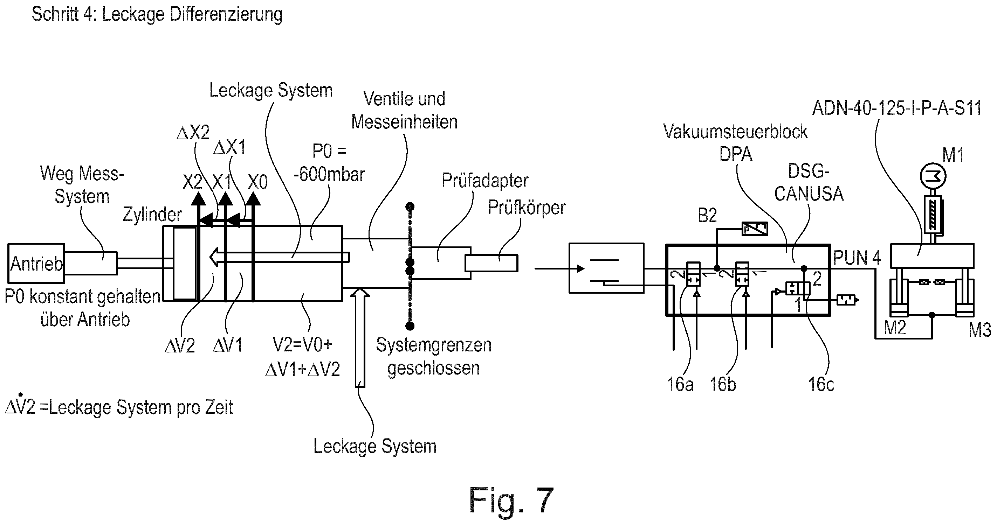

Figur 7 zeigt den Verfahrensschritt 4 der Leckage-Differenzierung, nun bei geschlossener Systemgrenze, also bei vom Ventil und dem Drucksensor 10 abgetrenntem Prüfadapter 4, z.B. mittels eines Stopfens. Der Prüfdruck wird weiterhin konstant, aber das Volumen kann sich weiter verändern, wobei sich der Kolben 12b von X₁ zu X₂ bewegt. Durch das Verschließen des Systems kann diese weitere Leckage aber auch nur noch durch eine Leckage im System (Systemleckage) bedingt sein, nicht aber im Prüfkörper. Hierbei ist nur das Zweitventil 16b offen; das Erstventil 16a und das Drittventil 16c sind hingegen geschlossen.

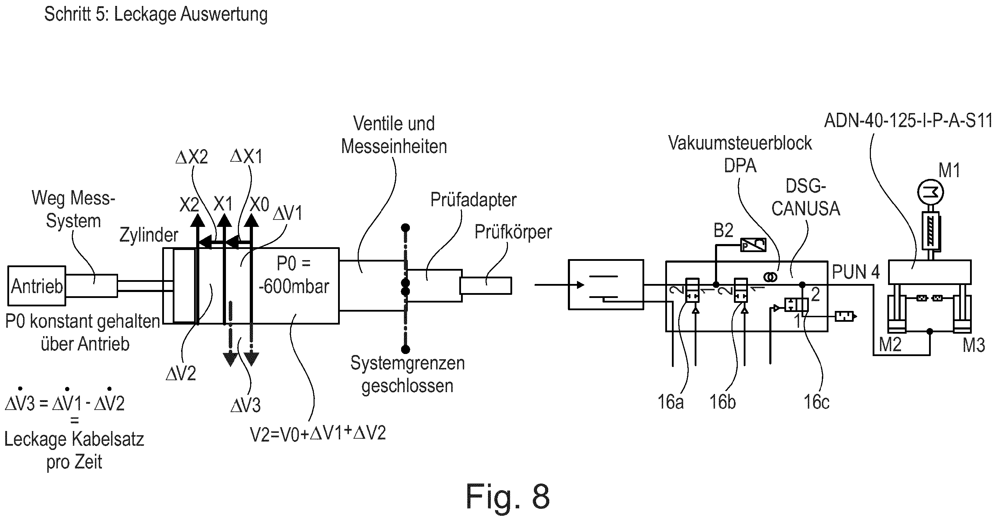

Figur 8 zeigt schließlich den letzten Verfahrensschritt 5 der Leckage-Auswertung. Dabei wird die Leckage ΔV₂ von ΔV₁ abzogen, wodurch sich die Leckage am Prüfkörper/Kabelsatz ΔV₃ ergibt, also ΔV₃ = ΔV₁ - ΔV₂. Hierbei ist das Zweitventil 16b weiterhin offen. Das Erstventil 16a und das Drittventil 16c sind geschlossen, können aber auch geöffnet sein.

Üblicherweise erfolgt die Messung mit Evakuierung über 420 bis 600 Sekunden. Die reinen Messzeiten der Volumenänderung betragen vorzugsweise 120 Sekunden, je nach Messung der Gesamt-Leckage oder nur System-Leckage.

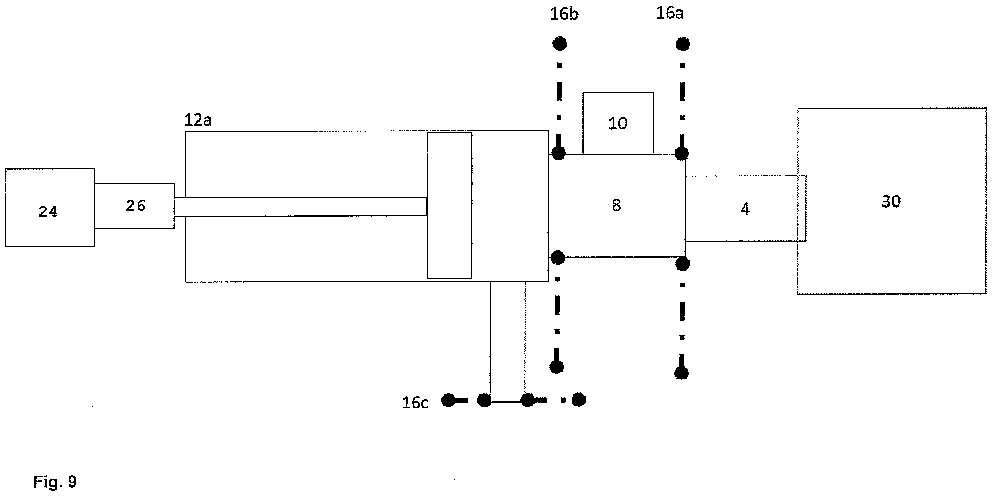

Figur 9 zeigt eine Weiterentwicklung des erfindungsgemäßen Verfahrens mit einem besonders großen Prüfkörper 30, der vorliegend ein Prüfkörpervolumen aufweist, welches dem oder mehr als dem Dreifachen des Zylinderkolbenvolumens entspricht, aber grundsätzlich beliebig groß gestaltet sein kann. Bei einem derartigen Verfahren kann z.B. softwaremäßig in dem System vorgesehen sein, dass der Kolben 12b mehrfach entlang der gesamten Länge des Zylinders 12a bis zum hinteren Todpunkt fährt, dort das Drittventil 16c geöffnet und das Zweitventil 16b geschlossen wird, sodass damit das zunächst angesaugte erste Teilvolumen des Prüfkörpers 30 nach Außen gedruckt wird und dieser Schritt dann noch mehrfach durchgeführt werden kann in Abhängigkeit des zu prüfenden Volumens. Dieses wird solange wiederholt bis der Prüfdruck erreicht ist. Sodann kann die zuvor beschriebene quasistatische Druckdifferenzmessung erfolgen.

Unabhängig von dem beschriebenen Prozess zur Möglichkeit des Evakuierens vom Vielfachgen des Zylindervolumens, kann das Prüfsystem durch Hinzufügen eines weiteren, also vierten Ventils und einer Venturi Düse oder ähnlichen Bauelements mit gleicher Funktion, welche innerhalb oder außerhalb des Prüfeinrichtung integriert werden können, so erweitert werden, dass ein schnelles Evakuieren vom gleichen oder vielfachen Prüfvolumina erfolgen kann. Hierbei wird die Venturi Düse mit Druckluft durch das Ventil beaufschlagt, welches direkt mit dem Prüfzylinder verbunden sein kann, wodurch der Prüfzylinder und der Prüfkörper direkt über die Venturi Düse evakuiert werden können. Nach diesem Prozess wird der Prüfdruck durch den Zylinder eingestellt und dann beginnt die zuvor beschriebene quasistatische Druckdifferenzmessung. Die Venturi-Düse realisiert hierbei quasi die "Grobevakuierung" und die "Feinevakuierung" erfolgt über die Druckerzeugungseinheit.

Zur Systemprüfung kann in den Prüfadapter 4 anstelle des Prüfkörpers ein Stopfen (nicht dargestellt) eingesetzt werden, sodass das System verschlossen ist. Nunmehr kann differenziert werden, ob sich um eine System-Leckage oder eine Prüfkörper-Leckage handelt.

### Bezugszeichenliste

- 2: Gehäuse
- 4: Adapter
- 4a: Einstecköffnung
- 4b: Dichtungsgehäuse
- 4c: Außengehäuseteil
- 4d, 4e: Dichtungsring
- 4f: Druckkörper
- 4g: Scheibe
- 4h: Versorgungsleitung
- 4i: Druckfeder
- 4j: Federnut
- 4k: Druckscheibe
- 4m: mittiger Distanzring
- 4n: äußerer Distanzring
- 6: Leitungsstück
- 8: Ventil
- 10: Drucksensor
- 12: Kolbenvakuumpumpe
- 12a: Zylinder
- 12b: Kolben
- 12c: Kolbenstange
- 16: Vakuumsteuerblock
- 16a: Erstventil
- 16b: Zweitventil
- 16c: Drittventil
- 16d: Kolbenwand
- 16f, 16g, 16h: Kolbendurchgangsleitung
- 16i, 16j: Wandöffnung
- V1, V2, V3: Steuerleitung
- 20: Messeinheit
- 22: Prüfkörper (Kabelsatz)
- 24: Antrieb
- 26: Wegmessystem
- 30: Prüfkörper

## Patentansprüche

1. Dichtigkeitsprüfverfahren mittels einer Dichtigkeitsprüfeinrichtung,
die Dichtigkeitsprüfeinrichtung umfassend
einen Prüfadapter (4) zur dichtenden Aufnahme eines Prüfkörpers (22), einen Drucksensor (10),
ein Ventil (8) und
eine Druckerzeugungseinheit (12) in Form einer Zylinder-Kolben-Kombination,
wobei der Innendruck der Prüfeinrichtung durch Verschieben des Kolbens der Druckerzeugungseinheit konstant gehalten wird und die Leckrate durch die Kolbenposition bestimmt wird,
**dadurch gekennzeichnet, dass**
nach Aufnahme des Prüfkörpers zunächst bei offenem Ventil (8) eine Gesamtleckrate der Dichtigkeitsprüfeinrichtung bestimmt wird,
danach nach Schließen des Ventils (8) der Prüfadapter von der Dichtigkeitsprüfeinrichtung abgetrennt wird,
danach die Leckrate der Prüfeinrichtung ohne Prüfadapter bestimmt wird und anschließend aus der Differenz der beiden Leckraten auf die Leckrate des Prüfkörpers geschlossen wird.

2. Dichtigkeitsprüfverfahren nach Anspruch 1, wobei der Prüfkörper (22) mindestens eine Leitung und ein mit dieser verbundenes Verbindungselement, insbesondere einem Stecker, einer Tülle, einem Terminal oder dergleichen umfasst, wobei sich die Leitung von einem Leitungsvorderende entlang einer Leitungslängsachse zu einem Leitungshinterende erstreckt, wobei das Verbindungselement an dem Leitungshinterende angeordnet ist, wobei das Leitungsvorderende z.B. durch Abisolieren offen ausgebildet ist, wobei das Leitungsvorderende in den Prüfadapter (4) der Dichtigkeitsprüfeinrichtung eingesteckt wird.

3. Dichtigkeitsprüfverfahren nach Anspruch 1 oder 2, wobei das Ventil (8) als Vakuumsteuerblock (16) mit mindestens 2 Ventilen (16a, 16b) zur Abtrennung des Prüfadapters (4) und mit einem Ventil (16c) zur Belüftung der Druckerzeugungseinheit (12) ausgebildet ist.

4. Dichtigkeitsprüfverfahren nach einem der Ansprüche 1 bis 3, wobei die Druckerzeugungseinheit (12) als zwei sich zueinander parallel erstreckende Kolben-Zylinder-Kombinationen (18a, 18b), die über einen gemeinsamen, als Schrittmotor (18c) ausgebildeten Antrieb verstellt werden, ausgebildet ist.

## Claims

1. Leak testing method using a leak testing device,
the leak testing device comprising
a test adapter (4) for sealingly receiving a test specimen (22),
a pressure sensor (10),
a valve (8), and
a pressure generating unit (12) in the form of a cylinder-piston combination, wherein the internal pressure of the testing device is kept constant by moving the piston of the pressure generating unit and the leak rate is determined by the piston position,
**characterized in that**
after the test specimen has been inserted, a total leakage rate of the leak testing device is first determined with the valve (8) open,
then, after the valve (8) has been closed, the test adapter is disconnected from the leak testing device,
then the leak rate of the test device is determined without the test adapter, and finally, the leak rate of the test specimen is determined from the difference between the two leak rates.

2. Leak test method according to claim 1, wherein the test specimen (22) comprises at least one line and a connecting element connected thereto, in particular a plug, a grommet, a terminal or the like, wherein the line extends from a front end of the line along a longitudinal axis of the line to a rear end of the line, wherein the connecting element is arranged at the rear end of the line, wherein the front end of the line is open, e.g. by stripping, wherein the front end of the line is inserted into the test adapter (4) of the leak test device.

3. Leak test method according to claim 1 or 2, wherein the valve (8) is designed as a vacuum control block (16) with at least two valves (16a, 16b) for separating the test adapter (4) and with a valve (16c) for venting the pressure generating unit (12).

4. Leak test method according to one of claims 1 to 3, wherein the pressure generating unit (12) is designed as two piston-cylinder combinations (18a, 18b) extending parallel to each other, which are adjusted via a common drive designed as a stepper motor (18c).

## Revendications

1. Procédé de contrôle d'étanchéité au moyen d'un dispositif de contrôle d'étanchéité,
le dispositif de contrôle d'étanchéité comprenant :
un adaptateur de contrôle (4) pour recevoir de manière étanche une éprouvette (22),
un capteur de pression (10),
une vanne (8), et
une unité de génération de pression (12) sous la forme d'une combinaison cylindre-piston,
la pression intérieure du dispositif de contrôle étant maintenue constante par déplacement du piston de l'unité de génération de pression, et le taux de fuite étant déterminé par la position du piston,
**caractérisé en ce que**
une fois que l'éprouvette est reçue, on détermine un taux de fuite global du dispositif de contrôle d'étanchéité, la vanne (8) étant d'abord ouverte,
puis, une fois que la vanne (8) est fermée, on sépare l'adaptateur de contrôle du dispositif de contrôle d'étanchéité,
puis, on détermine le taux de fuite du dispositif de contrôle dépourvu de l'adaptateur de contrôle, et
ensuite, à partir de la différence entre les deux taux de fuite, on déduit le taux de fuite de l'éprouvette.

2. Procédé de contrôle d'étanchéité selon la revendication 1,
dans lequel l'éprouvette (22) comprend au moins une ligne et un élément de connexion relié à celle-ci, en particulier un connecteur, un passe-fil, un terminal ou similaire,
la ligne s'étend d'une extrémité avant de la ligne le long d'un axe longitudinal de la ligne jusqu'à une extrémité arrière de la ligne,
l'élément de connexion est disposé à l'extrémité arrière de la ligne,
l'extrémité avant de la ligne est réalisée ouverte, par exemple par dénudation,
l'extrémité avant de la ligne est enfichée dans l'adaptateur de contrôle (4) du dispositif de contrôle d'étanchéité.

3. Procédé de contrôle d'étanchéité selon la revendication 1 ou 2,
dans lequel la vanne (8) est conçue comme un bloc de commande de vide (16) ayant au moins deux vannes (16a, 16b), destinées à séparer l'adaptateur de contrôle (4), et une vanne (16c), destinée à mettre à l'air l'unité de génération de pression (12).

4. Procédé de contrôle d'étanchéité selon l'une des revendications 1 à 3,
dans lequel l'unité de génération de pression (12) est conçue comme deux combinaisons piston-cylindre (18a, 18b) s'étendant parallèlement l'une à l'autre, qui sont réglées par un entraînement commun conçu comme un moteur pas à pas (18c).
